(19)

Europäisches Patentamt

European Patent Office

Office européen des brevets

(11) **EP 4 776 592 A1**

(12) **EUROPEAN PATENT APPLICATION**

(43) Date of publication:
**15.07.2026 Bulletin 2026/29**

(21) Application number: **25150729.9**

(22) Date of filing: **08.01.2025**

(51) International Patent Classification (IPC):
**H04L 45/122** (2022.01)   **H04L 45/12** (2022.01)
**H04L 45/16** (2022.01)   **H04L 45/24** (2022.01)

(52) Cooperative Patent Classification (CPC):
**H04L 45/122; H04L 45/123; H04L 45/124;
H04L 45/16; H04L 45/24**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Deutsche Telekom AG
53113 Bonn (DE)**

(72) Inventors:
• **GEITZ, Marc
  58089 Hagen (DE)**
• **SCHNIEDERS, Dominik
  52078 Aachen (DE)**

(74) Representative: **RDL Patentanwälte PartG mbB
Senefelderstrasse 26
70176 Stuttgart (DE)**

Remarks:
Amended claims in accordance with Rule 137(2)
EPC.

(54) **A METHOD FOR ROUTING DATA WITHIN A GLOBAL COMMUNICATION MESH**

(57) A method for routing data within a global communication mesh, wherein data volumes transmitted during a time interval by a local communication network connected to a local point of presence, POP, of a global communication mesh are routed from the local POP along a plurality of paths within the global communication mesh to a plurality of remote POPs by a router of the local POP, the global communication mesh comprising a plurality of POPs including the local POP and the remote POPs and a plurality of links respectively linking exactly two POPs; a computing system for a local communication network and a computer program product.

Fig. 4

**Description**

The invention relates to a method for routing data within a global communication mesh, wherein data volumes transmitted during a time interval by a local communication network connected to a local point of presence, POP, of a global communication mesh are routed from the local POP along a plurality of paths within the global communication mesh to a plurality of remote POPs by a router of the local POP, the global communication mesh comprising a plurality of POPs including the local POP and the remote POPs and a plurality of links respectively linking exactly two POPs. The invention further relates to a computing system for a network operator of a local communication network and a computer program product.

Methods of the above-mentioned kind form part of the state of the art in different embodiments and are used by, e.g., network operators of local communication networks to provide users of the local communication networks with a global connectivity. The global connectivity allows the users of a local communication network for communicating with users of a remote communication network, i.e., an international communication network or even an intercontinental communication network. The local communication network and the remote communication networks may be, e.g., cellular networks, fixed-line networks or combinations thereof. The global connectivity may be particularly desirable for enterprises establishing private networks between their subsidiaries based on the global communication mesh as a backbone.

The global communication mesh may be mathematically considered a connected graph having nodes and edges connecting the nodes wherein the nodes correspond to the POPs and the edges correspond to the links of the global communication mesh. In a connected graph, there is at least one path connecting any two nodes, the at least path comprising a sequence of edges. In other words, the connected graph is not partitioned.

Each link of the global communication mesh may be operated by a plurality of providers. Each provider may charge a transmission fee for using the link, fee for short. The charged fee usually depends on a data volume passing through the link when the data volume passes through the link and is usually represented by a fee function. The fee function may be continuous or discontinuous, i.e., may have steps. A simple continuous fee function may be linear, particularly constant, and have an offset. Of course, the fee function may alternatively have any complicated shape. The fee function may additionally have a time dependency, thus, defining different fees for identical data volumes passing through the link at different times. The time dependency may particularly result from usual, e.g., annual adjustments of fees made by the providers.

Each data volume to be transmitted from the local POP to a remote POP may generally be transmitted along a plurality of different paths within the global communication mesh. Apart from that, sizes of data volumes to be transmitted from the local POP to the remote POP may have a time dependency, i.e., an amount of data traffic between two POPs generally varies over time. For instance, a data volume to be transmitted during an hour of a night may be smaller than a data volume to be transmitted during an hour of a day.

The network operator naturally intends to provide the global connectivity as economically as possible. Due to the large number of remote POPs, paths and data volumes to be transmitted, the actual plurality of different fee functions related to a single link, the possibly very different shapes of the fee functions and the various dependencies of the relevant quantities on the time, the resulting optimization problem has, on the one hand, a high complexity requiring a very long computation time for solving and, on the other hand, algorithms for solving the optimization problem may not yield a global optimum of fees as a solution, but instead only a local optimum of the fees. Apart from that, known algorithms for solving the optimization problem may result in long transmission times, i.e., a high latency, for the transmitted data volumes.

It is, therefore an object of the invention, to suggest a method for routing data within a global communication mesh which allows for transmitting data packets within the global communication mesh efficiently and reliably at low fees. Further objects of the invention are to provide a computing system for a local communication network and a computer program product.

A first aspect of the invention is a method for routing data within a global communication mesh, wherein data volumes transmitted during a time interval by a local communication network connected to a local point of presence, POP, of a global communication mesh are routed from the local POP along a plurality of paths within the global communication mesh to a plurality of remote POPs by a router of the local POP, the global communication mesh comprising a plurality of POPs including the local POP and the remote POPs and a plurality of links respectively linking exactly two POPs. The router specifies a path for each data packet of the data volume. The data volume is herein considered an amount of digital data to be transmitted during a time interval, e.g., during an hour. The local POP may be referred to as a POP of origin. Each remote POP may be referred to as a POP of destination.

Thus, the data volume is different from a bandwidth of the path, i.e., a maximum capacity of the sequence of links of the path, but obviously absolutely limited by the available bandwidth along the path. While the bandwidth is a limiting factor, the invention explicitly only relates to data volumes which can be transmitted within the available bandwidth.

Usually, the network operator of the local communication network acquires the required data volumes from the providers of the links of the routing paths while the providers guarantee at least a bandwidth sufficient for transmitting the acquired data volumes. The sufficiency of the guaranteed bandwidth is contracted between the operator of the local communication network and the involved providers by means of a so-called service level agreement, SLA, fixing, e.g., a guaranteed maximum latency and a guaranteed maximum bit rate of the respective link.

According to the invention, a computing system automatically determines each data volume and a respective sequence of links as a path or the determined data volume within the global communication mesh, the determined data volumes and respective sequences minimizing fees for transmitting the data volumes within the global communication mesh, and automatically configures the router with the determined data volumes and respective sequences, and the determined data volumes and the sequences minimizing the fees are cooperatively determined by a classical computer of the computing system and a quantum computer of the computing system. The automatic determination of the data volumes and the respective sequences releases the operator of the communication network from statically specifying routes for data packets of the data volumes according to contracted SLAs. Apart from that, the automatic determination allows the network operator for contracting with the providers of the global communication mesh on the SLAs and dynamically specify the routes of the data packets. The cooperation of the classical computer and the quantum computer reduces a computation time for solving the optimization problem of minimizing the fees and increases a probability of finding the global minimum of the fees required for transmitting the data volumes.

As a result, both a computation time required for specifying data volumes, paths and fees required for transmitting the data volumes via the specified paths are reduced. In other words, an efficiency of routing the data volumes and a reliability of low fees for transmitting the data volumes, i.e., a precision of the specified routes, is increased.

It is noted that the computer device may also configure routers of the remote POPs and routers of intermediate POPs of the global communication mesh along the paths. Particularly, the router may be configured as a software defined networking, SDN, router. SDN routers may be comprised by each POP of the global communication mesh and still be automatically configured by the computing device of the network operator of the local communication network.

Preferably, cooperatively determining the data volumes and the respective sequences comprises the classical computer to execute steps of a multi-step probabilistic algorithm applied to an electric circuit, each link of the global communication mesh represented by an electric resistance of the electric circuit, each data volume transmitted through a link represented by an amperage in the respective electric resistance, each POP of the global communication mesh represented by a junction of at least two electric resistances and an external connector for inputting an amperage to the electric circuit at the junction or outputting an amperage from the electric circuit at the junction, and deriving in each step of the multi-step probabilistic algorithm respective systems of coupled linear equations from determined different states of the electric circuit, and the quantum computer to determine a solution of each derived system of coupled linear equations using the Harrow-Hassidim-Lloyd, HHL, algorithm. The probabilistic algorithm may be a Monte-Carlo algorithm, e.g., a simulated annealing algorithm, a quantum annealing algorithm or a complex processing algorithm. The amperage is a strength of an electric direct current. For instance, an amperage measured in mA may correspond to a data volume measured in Gbit.

The HHL algorithm allows the quantum computer to determine a solution of a system of coupled linear equations in an at least linear computation time, i.e., $O(N)$ with $N$ indicating a size of the system. In contrast, the Gaussian algorithm requires a computation time of $O(N^3)$.

The classical computer may randomly choose initial values of the electric resistances identical or different. The initial values of the electric resistances do not substantially affect the method as they are going to be independently varied from step to step.

Particularly, the classical computer determines the different states to have different single external connectors with a zero voltage applied to and an output amperage representing a net data volume arriving at the represented POP and respective remaining external connectors with an input amperage representing a net data volume departing from the represented POP. Obviously the determination of the different states requires a computation time of $O(N)$. Each state has a single external connector with a zero voltage applied to. In other words, the single external connector is grounded. The single external connector may be considered a drain of the electric circuit where the output amperage is drawn from the electric circuit. The remaining external connectors may be considered sources of the electric circuit where input amperages are supplied to the electric circuit. Of course, a sum of the input amperages always equals the output amperage. The amperages between neighboring junctions depend on the respective resistances connecting the neighboring junctions and voltages between the neighboring junctions. The term "net amperage" means a signed sum of amperages at a junction.

The classical computer may determine further different states selecting exactly one of the respective remaining external connectors and replacing electric resistances by open circuit breakers, the replaced electric resistances allowing a detour for an amperage flowing from the selected remaining external connector to the single external connector with a zero voltage applied to. This way, a length of the determined paths, i.e., a number of hops within the global communication mesh, and, hence, a latency of the resulting communication connections is reduced. Obviously, the determination of the further different states requires a computation time of $O(N)$.

Advantageously, each system of coupled linear equations is derived by applying Ohm's law and Kirchhoff's laws to the electric circuit, and each determined solution defines amperages in respective electric resistances, the defined amperages representing the determined data volumes transmitted. According to Ohm's law an electric resistance $R$ is given by a voltage, i.e., an electric potential difference U at the electric resistance over an amperage $I$ in the electric resistance:

$$R = \frac{U}{I}$$

Kirchhoff's laws enforce a net amperage at each junction to be zero and a net voltage along each closed loop of electric resistances to be zero. The term "net voltage" means a signed sum of voltages along a closed loop of electric resistances. In other words, an electric energy is conserved in the electric circuit.

In a favorable embodiment, the classical computer determines for each electric resistor a sum of data volumes represented by the amperages in the electric resistor over the states of the step, a link fee for the link represented by the electric resistor by multiplying the determined sum with a value of a minimum fee function evaluated for the represented data volume and a fee of the step by summing all link fees.

The classical computer may randomly vary values of the electric resistances for each step within a predetermined range by small values and accepts a minimum of determined fees of a step as the minimized fees for transmitting the data volumes. The random small variation causes correspondingly small variations of fees of successive steps. In case a fee of a step is lower than a fee of a last preceding step the fee of the step is accepted as a temporary minimum. Otherwise, the fee of the step is ignored. The method may halt accepting the temporary minimum as the minimum in case no lower temporary minimum is accepted for a predetermined number of steps.

Accepting or ignoring the fee of the step may alternatively depend on a probability function. The probability function allows for accepting even a fee of a step which is higher than a fee of the last preceding step. The probability function reduces a probability of missing a global minimum of the fees and arriving at a higher local minimum instead.

The minimum fee is favorably determined in a predetermined maximum number of steps. The predetermined maximum number of steps ensures the method eventually halts.

The classical computer may apply the multi-step probabilistic algorithm several times choosing each time different initial values of the electric resistances. The different initial values reduce a probability of missing a global minimum of the fees and arriving at a higher local minimum instead.

In an embodiment, the classical computer defines a minimum fee function assigned to a link by assigning to each data rate a lowest value of fee functions assigned by providers providing the link. The minimum fee function may comprise a plurality of successive portions in case the assigned fee functions have different shapes. For instance, the minimum fee function may be identical with a first fee function in a first region and with a second fee function in a second region separate from the first region.

The fees may be minimized for a plurality of successive time intervals, the successive intervals covering a continuous time. Thus, a varying routing over the continuous time is enabled. The continuous time may be a day, a week or a month. The routing may be varied hourly in case the successive time intervals last an hour each.

Another object of the invention is a computing system for a local communication network. The computing system is connectable to a router of a POP of a global communication mesh. The local communication network is connected to the local POP for providing users of the local communication network with a global connectivity.

According to the invention, the computing system comprises a classical computer and a quantum computer and is configured for cooperating with a router of a point of presence, POP, of a global communication mesh in a method according to an embodiment of the invention. The classical computer is connected to the quantum computer and is configured for controlling an operation of the quantum computer, i.e., transmitting a computation request to the quantum computer and receiving a computation result from the quantum computer. Such a cooperation of the classical computer and the quantum computer allows for a high efficiency of computation and a reliable and precise result of the computation. The combination of the classical computer and the quantum computer allows even for problems of the class NP, i.e., non-deterministic polynomial problems to be solved efficiently and reliably with a high precision. Due to the inventive configuration of the computing system, an operator of a local communication network may efficiently provide a routing of data volumes at reliably low fees.

The quantum computer preferably has logical qbits and an error correction. Due to the logical qbits and the error correction, the quantum computer is configured for solving systems of coupled linear equations in a logarithmic computation time in case most of the coefficients of the system of coupled linear equations are zero, i.e., $O(log(N))$ with N indicating a size of the system. The size of the system, herein, is a number of the POPs. In other words, a matrix comprising the coefficients of the system of coupled linear equations is sparse.

Still another object of the invention is a computer program product comprising a digital storage medium storing a program code. The digital storage medium is chosen from the group comprising a compact disk, CD, a digital versatile disk, DVD, a hard disk, HD, a random access memory, RAM, chip, a universal serial bus, USB, stick, a cloud storage and the like. The computer program product allows for implementing an inventive computing device connectable to a router of a POP of a global communication mesh. Of course, the computing device may be connectable to each POP of the global communication mesh. According to the invention, the program code causes a computing device to cooperate as the classical computer with a quantum computer and a router of a point of presence, POP, of a global communication mesh in a method according to an embodiment of the invention when being executed by a processor of the computing device. The program code enables the computing device to carry out the method steps required to be carried out by the classical computer cooperating with the quantum computer and the router. The computer program product allows for setting up the computing system required for efficiently determine routes for transmitting data volumes within the global communication mesh at reliably low fees.

It is an essential advantage of the inventive method that routes for transmitting data volumes within the global communication mesh are efficiently determined to allow a transmission of the data volumes reliably at low fees. In particular, the inventive method requires a computation time of $O(N^2 logN)$ without taking into account latency and a computation time of $O(N^3 logN)$ with taking into account latency. Thus, an operator of a local communication network can economically provide users of the local communication network with a global connectivity.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.

Fig. 1 schematically shows a computing system according to an embodiment of the invention for a global communication mesh and a global communication mesh;

Fig. 2 schematically shows graphs of exemplary fee functions having different shapes;

Fig. 3 schematically shows a graph of a minimum fee function resulting from the fee functions shown in fig. 2;

Fig. 4 schematically shows a state of an electric circuit modeling the global communication mesh shown in fig. 1.

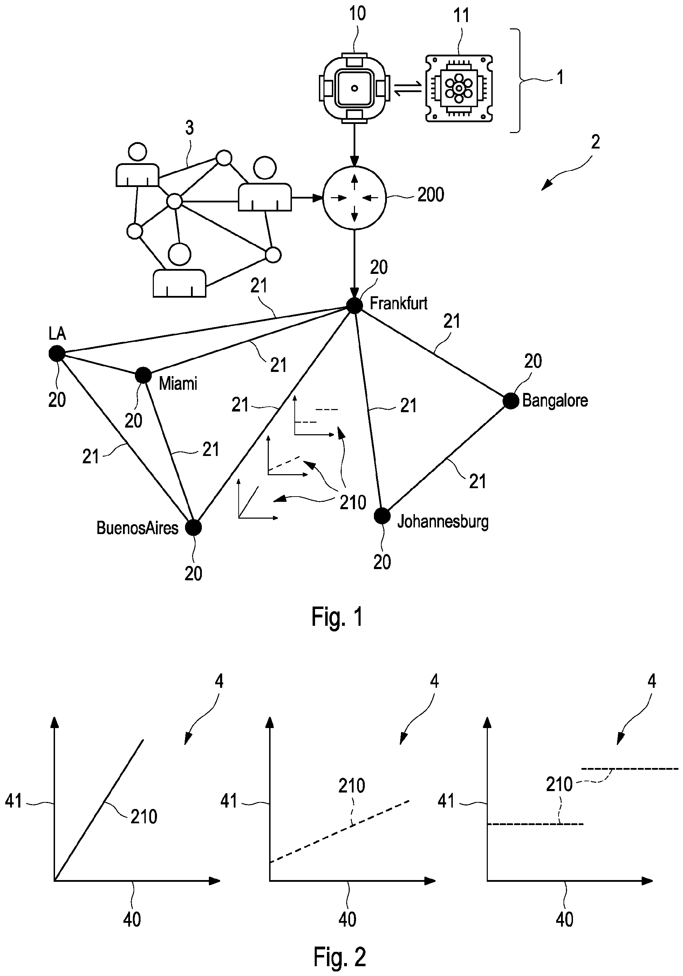

Fig. 1 schematically shows a computing system 1 according to an embodiment of the invention for a global communication mesh 2 and a global communication mesh 2. The global communication mesh 2 comprises a plurality of points of presence, POP, 20 and a plurality of links 21. Each link 21 links exactly two POPs 20. A local communication network 3 is connected to a local POP 20 included by the POPs 20, e.g., via a router 200 connected to the local POP 20. The local POP 20 comprises the router 200. The POPs 20 further include a plurality of remote POPs 20 different from the local POP 20.

Exemplarily, the global communication mesh 2 comprises six POPs 20 which are located at Los Angeles, LA, and Miami in the USA, at Buenos Aires in Argentina, at Frankfurt in Germany, at Johannesburg in South Africa and at Bangalore in India. Of course, the global communication mesh 2 may be and really is much larger, i.e., has many more POPs.

Further, the global communication mesh 2 comprises eight links 21 which respectively connect LA with Miami, LA with Frankfurt, LA with Buenos Aires, Miami with Frankfurt, Miami with Buenos Aires, Frankfurt with Johannesburg, Frankfurt with Bangalore and Johannesburg with Bangalore. Of course, the global communication mesh 2 may comprise and really comprises many more links.

Each link 21 is provided by at least one provider, generally by a plurality of providers with each provider assigning a fee function 210 (see below) to each provided link 21.

The computing system 1 comprises a classical computer 10 and a quantum computer 11. The quantum computer 11 may have logical qbits and an error correction and is configured for cooperating with the router 200 of the local POP 20 of the global communication network 2 in a method according to an embodiment of the invention.

The classical computer 10 may be implemented by means of a computer program product comprising a digital storage medium. The digital storage medium stores a program code. The program code causes a computing device to cooperate as the classical computer 10 with the quantum computer 11 and the router 200 of the local point of presence, POP, 20 of the global communication mesh 2 in an inventive method as follows when being executed by a processor of the computing device.

The method is adequate for routing data within the global communication mesh 2.

The classical computer 10 may define a minimum fee function 211 assigned to a link 21 by assigning to each data rate a lowest value of fee functions 210 assigned by providers providing the link 21.

Fig. 2 schematically shows graphs 4 of exemplary fee functions 210 having different shapes. Each fee function 210 is related to a provider of a link of the global communication mesh and assigns a fee to a data volume. Particularly, the fee functions 210 are related to different providers providing the same link 21 of the global communication mesh 2. The fee functions 210 may be applicable to the same interval of time, e.g., an hour of a day. It is noted that fee functions related to the same providers and applicable to different intervals of time, e.g., an hour of a night, may have different values and shapes.

Each graph 4 has an abscissa 40 indicating a data volume in Gbit and an ordinate 41 indicating a fee in a currency, e.g., in Euro. The left fee function 210 is linear and continuous. The middle fee function 210 is linear having an offset continuous. The right fee function 210 is discontinuous having two partitions and being constant within each partition. The given fee functions are exemplary only and do not limit the invention. Rather may the fee functions have different and even more complicated shapes.

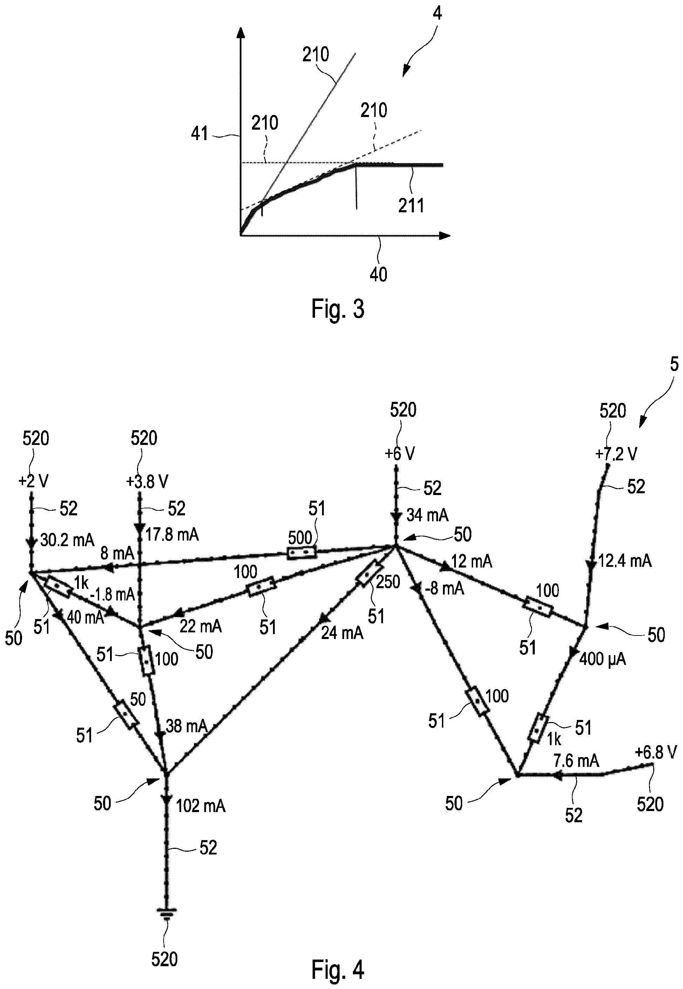

Fig. 3 schematically shows a graph 4 of a minimum fee function 211 resulting from the fee functions 210 shown in fig. 2. Again, the graph 4 has an abscissa 40 indicating a data volume in Gbit and an ordinate 41 indicating a fee in a currency, e.g., in Euro. For each data volume, the minimum fee function 211 selects the minimum fee out of the three fees assigned to the data volume by the three fee functions 210. As can be seen by comparison, the minimum fee function 211 corresponds to the left fee function 210 over a low range of data volumes, to the middle fee function 210 over a mid range of data volumes and to the right fee function 210 over a right range of data volumes.

While the shown minimum fee function 211 is exactly derived from the three fee functions 210 shown in fig. 2, different fee functions 210 would cause a different resulting minimum key function.

Data volumes transmitted during a time interval, e.g., an hour by the local communication network 3 connected to the local point of presence, POP, 20 of the global communication mesh 2 are routed from the local POP 20 along a plurality of paths within the global communication mesh 2 to a plurality of remote POPs 20 by the router 200 of the local POP 20, the global communication mesh 2 comprising the plurality of POPs 20 including the local POP 20 and the remote POPs 20 and a plurality of links 21 respectively linking exactly two POPs 20.

The computing system 1 automatically determines each data volume and a respective sequence of links 21 as a path of the determined data volume within the global communication meth 2, the determined data volumes and respective sequences minimizing fees for transmitting the determined data volumes within the global communication mesh 2, and automatically configures the router 200 with the determined data volumes and respective sequences.

The data volumes and the respective sequences minimizing the fees are cooperatively determined by the classical computer 10 of the computing system 1 and the quantum computer 11 of the computing system 1. Cooperatively determining the data volumes and the respective sequences preferably comprises the classical computer 10 to execute steps of a multi-step probabilistic algorithm applied to an electric circuit 5.

Fig. 4 schematically shows a state of an electric circuit 5 modeling the global communication mesh 2 shown in fig. 1. The state relies on the following data:

> Los Angeles → Buenos Aires: 30,2 Gbit (during an hour)
> Miami → Buenos Aires 17,8 Gbit (during the hour)
> Frankfurt → Buenos Aires 34 Gbit (during the hour)
> Bangalore → Buenos Aires 12,4 Gbit (during the hour)
> Johannesburg → Buenos Aires 7,6 Gbit (during the hour)
> Los Angeles → Frankfurt 55,2 Gbit (during the hour)
> Miami → Frankfurt 20,1 Gbit (during the hour)
> Buenos Aires → Frankfurt 18,0 Gbit (during the hour)
> Bangalore → Frankfurt 22,1 Gbit (during the hour)
> Johannesburg → Frankfurt 12,2 Gbit (during the hour)

The data may be referred to as an origin-destination, OD, matrix. Each element of the matrix defines a data volume to be transmitted via a link of the global communication mesh 2. As the global communication mesh is not dense, i.e., many POPs are not linked by a single link, the OD matrix is sparse and comprises a plurality of zero elements.

Each link 21 of the global communication mesh 2 is represented by an electric resistance 50 of the electric circuit 5. Each data volume transmitted through a link 21 is represented by an amperage in the respective electric resistance 50. For instance, the link 21 "Frankfurt → Los Angeles" is represented by an electric resistance 50 of 500 S2 while the link 21 "Frankfurt → Buenos Aires" is represented by an electric resistance 50 of 250 Ω.

Each POP 20 of the global communication mesh 2 represented by a junction 51 of at least two electric resistances 50 and an external connector 52 for inputting an amperage to the electric circuit 5 at the junction 51 or outputting an amperage from the electric circuit 5 at the junction 51.

Cooperatively determining the data volumes and the respective sequences preferably comprises the classical computer 10 to derive in each step of the multi-step probabilistic algorithm respective systems of coupled linear equations from determined different states of the electric circuit 5, and the quantum computer 11 to determine a solution of each derived system of coupled linear equations using the Harrow-Hassidim-Lloyd, HHL, algorithm.

The classical computer 10 may randomly choose initial values of the electric resistances 50 identical or different.

The classical computer 10 advantageously determines the different states to have different single external connectors 52 with a zero voltage 520 applied to and an output amperage representing a net data volume arriving at the represented POP 20 and respective remaining external connectors 52 with an input amperage representing a net data volume departing from the represented POP 20.

The state shown in fig. 4 is determined by the external connector 52 "Buenos Aires" with the zero voltage 520 applied to. The external connector 52 "Buenos Aires" outputs an electric direct current of 102 mA corresponding to 102 Gbit = 30,2 Gbit (Los Angeles) + 17,8 Gbit (Miami) + 34 Gbit (Frankfurt) + 12,4 Gbit (Bangalore) + 7,6 Gbit (Johannesburg). The respective electric direct currents are inputted to the external connectors 52 "Los Angeles", "Miami", "Frankfurt", "Bangalore" and "Johannesburg".

Favorably, the classical computer 10 may determine further different states selecting exactly one of the respective remaining external connectors 52 and removing electric resistances 50 resulting in a detour for an electric direct current flowing from the selected remaining external connector 52 to the single external connector 52 with a zero voltage 520 applied to.

Each system of coupled linear equations may be derived by applying Ohm's law and Kirchhoff's laws to the electric circuit 5, and each determined solution may define amperages in respective electric resistances 50, the defined amperages representing the determined data volumes transmitted. For instance, the amperage in the electric resistance 50 representing the link 21 "Frankfurt → Los Angeles" is defined as 8 mA, while the amperage in the electric resistance 50 representing the link 21 "Frankfurt → Buenos Aires" is defined as 24 mA. The voltages 520, i.e., +2 V, +3,8 V, +6 V, +7,2 V, +6,8 V applied to the remaining external connectors 52 of the junctions "Los Angeles", "Miami", "Frankfurt", "Bangalore" and "Johannesburg" are also defined by the determined solution.

The classical computer 10 may determine for each electric resistor 50 a sum of data volumes represented by the amperages in the electric resistor 50 over the states of the step, a link fee for the link 21 represented by the electric resistor 50 by multiplying the determined sum with a value of the minimum fee function 211 evaluated for the represented data volume and a fee of the step by summing all link fees.

The classical computer 10 may randomly vary values of the electric resistances 50 for each step within a predetermined range by small values and accepts a minimum of determined fees of a step as the minimized fees for transmitting the data volumes. For instance, the values may be varied by an amount resulting from a random number between -1 and 1 multiplied by a percentage of the predetermined range.

The minimum fee is preferably determined in a predetermined maximum number of steps.

The classical computer 10 may apply the multistep probabilistic algorithm several times choosing each time different initial values of the electric resistances 50.

The fees are minimized for a plurality of successive time intervals, the successive time intervals covering a continuous time, e.g., a day, a week or a month.

**Reference Numerals**

| 1 | computing system |
|---|---|
| 10 | classical computer |
| 11 | quantum computer |
| 2 | global communication mesh |
| 20 | point of presence, POP |
| 200 | router |
| 21 | link |
| 210 | fee function |
| 211 | minimum fee function |
| 3 | local communication network |
| 4 | graph |
| 40 | abscissa |
| 41 | ordinate |
| 5 | electric circuit |
| 50 | electric resistance |
| 51 | junction |
| 52 | external connector |
| 520 | voltage |

**Claims**

1.　A method for routing data within a global communication mesh (2), wherein

- data volumes transmitted during a time interval by a local communication network (3) connected to a local point of presence, POP, (20) of a global communication mesh (2) are routed from the local POP (20) along a plurality of paths within the global communication mesh (2) to a plurality of remote POPs (20) by a router (200) of the local POP (20), the global communication mesh (2) comprising a plurality of POPs (20) including the local POP (20) and the remote POPs (20) and a plurality of links (21) respectively linking exactly two POPs (20);

- a computing system (1) automatically determines each data volume and a respective sequence of links (21) as a path of the determined data volume within the global communication mesh (2), the determined data volumes and respective sequences minimizing fees for transmitting the determined data volumes within the global communication mesh (2), and automatically configures the router (200) with the determined data volumes and respective sequences;

- the data volumes and the respective sequences minimizing the fees are cooperatively determined by a classical computer (10) of the computing system (1) and a quantum computer (11) of the computing system (1).

2. The method according to claim 1, wherein cooperatively determining the data volumes and the respective sequences comprises the classical computer (10) to execute steps of a multi-step probabilistic algorithm applied to an electric circuit (5), each link (21) of the global communication mesh (2) represented by an electric resistance (50) of the electric circuit (5), each data volume transmitted through a link (21) represented by an amperage in the respective electric resistance (50), each POP (20) of the global communication mesh (2) represented by a junction (51) of at least two electric resistances (50) and an external connector (52) for inputting an amperage to the electric circuit (5) at the junction (51) or outputting an amperage from the electric circuit (5) at the junction (51), and deriving in each step of the multi-step probabilistic algorithm respective systems of coupled linear equations from determined different states of the electric circuit (5), and the quantum computer (11) to determine a solution of each derived system of coupled linear equations using the Harrow-Hassidim-Lloyd, HHL, algorithm.

3. The method according to claim 2, wherein the classical computer (10) randomly chooses initial values of the electric resistances (50) identical or different.

4. The method according to claim 3, wherein the classical computer (10) determines the different states to have different single external connectors (52) with a zero voltage (520) applied to and an output amperage representing a net data volume arriving at the represented POP (20) and respective remaining external connectors (52) with an input amperage representing a net data volume departing from the represented POP (20).

5. The method according to claim 4, wherein the classical computer (10) determines further different states selecting exactly one of the respective remaining external connectors (52) and replacing electric resistances (50) by open circuit breakers, the replaced electric resistances allowing a detour for an amperage flowing from the selected remaining external connector (52) to the single external connector (52) with a zero voltage (520) applied to.

6. The method according to one of claims 3 to 5, wherein each system of coupled linear equations is derived by applying Ohm's law and Kirchhoff's laws to the electric circuit (5), and each determined solution defines amperages in respective electric resistances (50), the defined amperages representing the determined data volumes transmitted.

7. The method according to claim 6, wherein the classical computer (10) determines for each electric resistor (50) a sum of data volumes represented by the amperages in the electric resistor (50) over the states of the step, a link fee for the link (21) represented by the electric resistor (50) by multiplying the determined sum with a value of a minimum fee function evaluated for the represented data volume and a fee of the step by summing all link fees.

8. The method according to claim 7, wherein the classical computer (10) randomly varies values of the electric resistances (50) for each step within a predetermined range by small values and accepts a minimum of determined fees of a step as the minimized fees for transmitting the data volumes.

9. The method according to claim 8, wherein the minimum fee is determined in a predetermined maximum number of steps.

10. The method according to one of claims 2 to 9, wherein the classical computer (10) applies the multi-step probabilistic algorithm several times choosing each time different initial values of the electric resistances (50).

11. The method according to one of claims 1 to 10, wherein the classical computer (10) defines a minimum fee function (211) assigned to a link (21) by assigning to each data rate a lowest value of fee functions (210) assigned by providers providing the link (21).

12. The method according to one of claims 1 to 11, wherein the fees are minimized for a plurality of successive time intervals, the successive intervals covering a continuous time.

13. A computing system (1) for a local communication network (3), comprising a classical computer (10) and a quantum computer (11), the computing system (1) being configured for cooperating with a router (200) of a point of presence, POP, (20) of a global communication mesh (2) in a method according to one of claims 1 to 12.

14. The computing system according to claim 13, wherein the quantum computer (11) has logical qbits and an error correction.

15. A computer program product, comprising a digital storage medium storing a program code, the program code causing a computing device to cooperate as a classical computer (10) with a quantum computer (11) and a router (200) of a point of presence, POP, (20) of a global communication mesh (2) in a method according to one of claims 1 to 12 when being executed by a processor of the computing device.

**Amended claims in accordance with Rule 137(2) EPC.**

1. A method for routing data within a global communication mesh (2), wherein

   - data volumes transmitted during a time interval by a local communication network (3) connected to a local point of presence, POP, (20) of a global communication mesh (2) are routed from the local POP (20) along a plurality of paths within the global communication mesh (2) to a plurality of remote POPs (20) by a router (200) of the local POP (20), the global communication mesh (2) comprising a plurality of POPs (20) including the local POP (20) and the remote POPs (20) and a plurality of links (21) respectively linking exactly two POPs (20);
   - a computing system (1) automatically determines each data volume and a respective sequence of links (21) as a path of the determined data volume within the global communication mesh (2), the determined data volumes and respective sequences minimizing fees for transmitting the determined data volumes within the global communication mesh (2), and automatically configures the router (200) with the determined data volumes and respective sequences;
   - the data volumes and the respective sequences minimizing the fees are cooperatively determined by a classical computer (10) of the computing system (1) and a quantum computer (11) of the computing system (1), wherein cooperatively determining the data volumes and the respective sequences comprises the classical computer (10) to execute steps of a multi-step probabilistic algorithm applied to an electric circuit (5), each link (21) of the global communication mesh (2) represented by an electric resistance (50) of the electric circuit (5), each data volume transmitted through a link (21) represented by an amperage in the respective electric resistance (50), each POP (20) of the global communication mesh (2) represented by a junction (51) of at least two electric resistances (50) and an external connector (52) for inputting an amperage to the electric circuit (5) at the junction (51) or outputting an amperage from the electric circuit (5) at the junction (51), and deriving in each step of the multi-step probabilistic algorithm respective systems of coupled linear equations from determined different states of the electric circuit (5), and the quantum computer (11) to determine a solution of each derived system of coupled linear equations using the Harrow-Hassidim-Lloyd, HHL, algorithm.

2. The method according to claim 1, wherein the classical computer (10) randomly chooses initial values of the electric resistances (50) identical or different.

3. The method according to claim 2, wherein the classical computer (10) determines the different states to have different single external connectors (52) with a zero voltage (520) applied to and an output amperage representing a net data volume arriving at the represented POP (20) and respective remaining external connectors (52) with an input amperage representing a net data volume departing from the represented POP (20).

4. The method according to claim 3, wherein the classical computer (10) determines further different states selecting exactly one of the respective remaining external connectors (52) and replacing electric resistances (50) by open circuit breakers, the replaced electric resistances allowing a detour for an amperage flowing from the selected remaining external connector (52) to the single external connector (52) with a zero voltage (520) applied to.

5. The method according to one of claims 2 to 4, wherein each system of coupled linear equations is derived by applying Ohm's law and Kirchhoff's laws to the electric circuit (5), and each determined solution defines amperages in respective electric resistances (50), the defined amperages representing the determined data volumes transmitted.

6. The method according to claim 5, wherein the classical computer (10) determines for each electric resistor (50) a sum of data volumes represented by the amperages in the electric resistor (50) over the states of the step, a link fee for the link (21) represented by the electric resistor (50) by multiplying the determined sum with a value of a minimum fee function evaluated for the represented data volume and a fee of the step by summing all link fees.

7. The method according to claim 6, wherein the classical computer (10) randomly varies values of the electric resistances (50) for each step within a predetermined range by small values and accepts a minimum of determined fees of a step as the minimized fees for transmitting the data volumes.

8. The method according to claim 7, wherein the minimum fee is determined in a predetermined maximum number of steps.

9. The method according to one of claims 1 to 8, wherein the classical computer (10) applies the multi-step probabilistic algorithm several times choosing each time different initial values of the electric resistances (50).

10. The method according to one of claims 1 to 9, wherein the classical computer (10) defines a minimum fee function (211) assigned to a link (21) by assigning to each data rate a lowest value of fee functions (210) assigned by providers providing the link (21).

11. The method according to one of claims 1 to 10, wherein the fees are minimized for a plurality of successive time intervals, the successive intervals covering a continuous time.

12. A computing system (1) for a local communication network (3), comprising a classical computer (10) and a quantum computer (11), the computing system (1) being configured for cooperating with a router (200) of a point of presence, POP, (20) of a global communication mesh (2) in a method according to one of claims 1 to 11.

13. The computing system according to claim 12, wherein the quantum computer (11) has logical qbits and an error correction.

14. A computer program product, comprising a digital storage medium storing a program code, the program code causing a computing device to cooperate as a classical computer (10) with a quantum computer (11) and a router (200) of a point of presence, POP, (20) of a global communication mesh (2) in a method according to one of claims 1 to 11 when being executed by a processor of the computing device.

Fig. 1

Fig. 2

Fig. 3

Fig. 4

Europäisches
Patentamt
European
Patent Office
Office européen
des brevets

**EUROPEAN SEARCH REPORT**

Application Number

EP 25 15 0729

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ENGEL SEBASTIAN ET AL: "Segment Routing with Digital Annealing", NOMS 2022-2022 IEEE/IFIP NETWORK OPERATIONS AND MANAGEMENT SYMPOSIUM, IEEE, 25 April 2022 (2022-04-25), pages 1-9, XP034133422, DOI: 10.1109/NOMS54207.2022.9789782 [retrieved on 2022-06-10] * Section III The Segment Routing Optimization Problem * * Section V The 2-SR Problem as QUBO and Iterative Algorithm * ----- | 1,11-15 | INV. H04L45/122 H04L45/12 H04L45/16 H04L45/24 |
| X | EP 4 106 263 A1 (DEUTSCHE TELEKOM AG [DE]; UNIV MUENCHEN LUDWIG MAXIMILIANS [DE]) 21 December 2022 (2022-12-21) * paragraph [0001] * * paragraph [0003] * * paragraph [0008] - paragraph [0013] * * paragraph [0022] - paragraph [0023] * * paragraph [0026] - paragraph [0028] * * paragraph [0030] - paragraph [0031] * * paragraph [0035] - paragraph [0037] * * paragraph [0048] - paragraph [0049] * * paragraph [0057] * * paragraph [0072] - paragraph [0080] * ----- -/-- | 1,11-15 | |
| | | | TECHNICAL FIELDS SEARCHED (IPC) |
| | | | H04L |

The present search report has been drawn up for all claims

| Place of search | Date of completion of the search | Examiner |
|---|---|---|
| The Hague | 30 May 2025 | Beker, Sergio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................

& : member of the same patent family, corresponding document

EPO FORM 1503 03.82 (P04C01)

Europäisches Patentamt
European Patent Office
Office européen des brevets

# EUROPEAN SEARCH REPORT

Application Number

EP 25 15 0729

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FAN LEI ET AL: "Hybrid Quantum-Classical Computing for Future Network Optimization", IEEE NETWORK, IEEE SERVICE CENTER, NEW YORK, NY, US, vol. 36, no. 5, 1 September 2022 (2022-09-01), pages 72-76, XP011928330, ISSN: 0890-8044, DOI: 10.1109/MNET.001.2200150 [retrieved on 2022-11-25] * the whole document * ----- | 1-15 | |
| A | ROBERTO CAMPOS: "Hybrid Quantum-Classical Algorithms", ARXIV.ORG, CORNELL UNIVERSITY LIBRARY, 201 OLIN LIBRARY CORNELL UNIVERSITY ITHACA, NY 14853, 18 June 2024 (2024-06-18), XP091792686, * Chapter 2 Classical Algorithms for S&S; page 13 - page 21 * * Chapter 3 Quantum Algorithms for S&S; page 23 - page 29 * ----- | 1-15 | |

TECHNICAL FIELDS SEARCHED (IPC)

The present search report has been drawn up for all claims

| Place of search | Date of completion of the search | Examiner |
|---|---|---|
| The Hague | 30 May 2025 | Beker, Sergio |

## ANNEX TO THE EUROPEAN SEARCH REPORT
## ON EUROPEAN PATENT APPLICATION NO.

EP 25 15 0729

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2025

| Patent document cited in search report | Publication date | Patent family member(s) | Publication date |
|---|---|---|---|
| EP 4106263 A1 | 21-12-2022 | NONE | |

For more details about this annex : see Official Journal of the European Patent Office, No. 12/82